# EUROPÄISCHE PATENTSCHRIFT

(11) **EP 0 876 571 B1**
(45) Veröffentlichungstag und Bekanntmachung des Hinweises auf die Patenterteilung: **27.10.1999**
(21) Anmeldenummer: 97902214.2
(22) Anmeldetag: 24.01.1997
(51) Int. Cl.: F23G 5/02, F23G 7/00

(54) **VERBRENNUNGSVERFAHREN FÜR INDUSTRIEABFÄLLE**
INDUSTRIAL WASTE COMBUSTION PROCESS
PROCEDE D'INCINERATION DE DECHETS INDUSTRIELS

(30) Priorität: 24.01.1996 DE 19602399
(43) Veröffentlichungstag der Anmeldung: 11.11.1998
(73) Patentinhaber: BASF Coatings Aktiengesellschaft, 48165 Münster (DE)
(72) Erfinder: KÖHLER, Kurt, D-67256 Weisenheim (DE); BÜRGER, Alfred, D-48248 Dülmen (DE); BERTICH, Heinz, D-67117 Limburgerhof (DE); DINKELBORG-LÜCKE, Wilhelm, D-48301 Nottuln (DE); HETZELBERGER, Rolf, D-50672 Köln (DE); KOLBERG, Paul, D-48165 Münster (DE); MÖHLMANN, Karl-Heinz, D-48165 Münster (DE); WALTERBUSCH, Michael, D-59387 Ascheberg (DE)
(74) Vertreter: Fitzner, Uwe, Dr.
(86) Internationale Anmeldenummer: EP9700322
(87) Internationale Veröffentlichungsnummer: WO9727429

(56) Entgegenhaltungen:
- DE-A- 2 845 763
- DE-C- 3 615 565
- FR-A- 2 702 488
- GB-A- 1 464 284

## Beschreibung

Die Erfindung betrifft ein Verbrennungsverfahren für überwiegend feste Industrie- und Sonderabfälle.

Die thermische Entsorgung von Industrie- und Sonderabfällen stellt eines der wichtigsten Verfahren zur umweltverträglichen und gleichzeitig kostengünstigen Beseitigung von Problemabfällen dar. Es gibt daher zahlreiche Anstrengungen, geeignete Verbrennungsanlagen zu entwickeln und weiter zu optimieren. Hauptanliegen bei einer derartigen Optimierung ist die Reduzierung von schädlichen Emissionen der Anlage. Weitere Anforderungen beinhalten den vollständigen Abbau der zugeführten Schadstoffe, die Erzielung möglichst wiederverwertbarer, inerter Verbrennungsreste sowie die optimale Nutzung der im Abfall gebundenen thermischen Energie.

Eine wichtige Voraussetzung für das Erreichen der o.g. Ziele ist eine möglichst gleichmäßige, homogene Verbrennung der Abfallstoffe. Dies ist jedoch insbesondere bei überwiegend festen Abfällen problematisch. Derartige Abfälle sind häufig in sich heterogen und bilden im Verbrennungsraum Bereiche, in denen bestimmte Stoffe mit hoher Konzentration vorkommen. Die Verbrennung dieser Stoffe kann daher unter Umständen zu unerwünschten, toxischen Nebenprodukten führen. Häufig werden die Abfallstoffe zudem in Verpackungsbehältern wie z.B. Fässern angeliefert, die sich im Verbrennungsraum öffnen und damit einen plötzlichen hohen Sauerstoffbedarf für ihre Verbrennung erfordern. Da in der Regel dieser Sauerstoffbedarf nicht ausreichend befriedigt werden kann, kommt es zu einer unvollständigen Verbrennung, die einerseits unverbrannte Rückstände zurückläßt, andererseits für die Entstehung unerwünschter Nebenprodukte verantwortlich ist. Für die Verbrennung von festen Abfallstoffen ist es daher wünschenswert, diese möglichst homogen und zerkleinert vorliegen zu haben, so daß sie eine große, für Sauerstoff gut zugängliche Oberfläche haben.

Aus dem Stand der Technik sind verschiedene Maßnahmen bekannt, um eine Zerkleinerung und Homogenisierung von Abfallstoffen vor der Verbrennung zu erreichen.

So beschreibt z.B. H. Lehmann in seinem Artikel "Primärseitige Maßnahmen zur Emissionsminderung bei der thermischen Verwertung von Abfallstoffen" ("Energieanwendung, Energie- und Umwelttechnik", Heft 1, Januar 1994, S. 16 ff.) u.a. ein Verfahren zur Aufbereitung des Verbrennungsgutes. Dieses umfaßt insbesondere die Zerkleinerung auf Stückgrößen von unter 50 mm. Anschließend findet eine homogene Vermischung mit einem Additivstoff statt, der bestimmte Schadstoffe, wie z.B. Schwefel, Chlor oder Fluor binden soll. Das genannte Verfahren wird angewendet für Hausmüll sowie schadstoffbeladene Aktivkohle.

Aus der DE-OS 2147897 ist bekannt, für die Zerkleinerung des Mülls Schlagbrecher, Hammermühlen oder Messermahlwerke einzusetzen (S. 13 unten). Ein den Mühlen nachgeschaltetes Sieb sorgt dafür, daß eine Stückgröße unter 25 mm erreicht wird (S.4 unten). Das beschriebene Verfahren wird nur auf Hausmüll angewandt.

Aus der FR-A-2702488 ist ein Verfahren bekannt, mit dem sehr reine Abfallfraktionen unter Durchführung aufwendiger Analysen zu einer optimalen, nicht näher bezeichneten Mischung zusammengestellt werden. Ziel ist eine pastöse, durch Rohrleitungen beförderbare Masse, die sich als selbständiges Zwischenprodukt transportieren und verwerten läßt. Konkrete Mischungsverhältnisse verschiedener Abfallsorten werden nicht vorgegeben. In dem Verfahren findet eine Zerkleinerung und Homogenisierung des Abfalls statt, allerdings nicht in einer Inertgasatmosphäre.

Schließlich ist auch aus der Zeitschrift "Aufbereitungs-Technik" (Nr. 5/1962, S. 211 ff.) bekannt, Müll zuerst über eine Mühle zu schicken, um ein auf 0 -15 mm zerkleinertes Gut zu erhalten. Bei dem nach diesem Verfahren eingesetzten Müll handelt es sich vorwiegend um Hausmüll, dem nur ggf. etwas Industriemüll beigefügt sein kann. Über die Art dieses Industriemülls werden jedoch keine weiteren Angaben gemacht.

Mit dem Einfluß einer Homogenisierung setzt sich die Literaturstelle A. Christmann: "Einfluß einer Brennstoffvorbehandlung auf den Prozeß einer Müllverbrennungsanlage", DE-Z: Technische Mitteilungen 78. Jahrgang, Heft 5, Mai 1985, Seite 213 bis 218 auseinander. Dabei geht es um die Verbrennung von Hausmüll, dem gegebenfalls Klärschlämme zugemischt werden können. Zur Erhöhung des Heizwerts wird dabei eine Reduzierung der Feuchte des Klärschlamms in dampfbeheizten Drehtrommeln durchgeführt. Ferner findet eine Vorsortierung der Abfälle statt, wobei insbesondere Metalle ausgesondert werden. Im Verbrennungsprozeß wird eine hohe Feuerraumtemperatur erreicht.

Zusammenfassend kann festgestellt werden, daß nach dem Stand der Technik die Zerkleinerung von Abfallstoffen vor der Verbrennung bekannt ist. Eine Durchmischung und Homogenisierung findet jedoch in der Regel nicht statt. Zudem sind die o.g. Verfahren fast ausschließlich auf Hausmüll anwendbar. Bei der Verbrennung von Industrie- und Sonderabfällen, wie sie insbesondere in der Lackindustrie anfallen, sind die o.g. Verfahren nicht anwendbar. Bei derartigen Abfällen können aufgrund ihrer Zusammensetzung (z.B. Anteile an entzündlichen und leicht entzündlichen Flüssigkeiten) ohne besondere Gegenmaßnahmen Probleme beim Aufbrechen von Feststoffen und Abfallbehältern und der Durchmischung von Abfällen aus unterschiedlichen Herkunftsbereichen entstehen.

Diese besonderen Probleme der Verbrennung von Industrieabfällen sind Gegenstand der DE-AS 2 245 324. Im dort beschriebenen Verfahren werden die Industrieabfälle in Gebinden angeliefert. Um eine gleichmäßige Verbrennung zu erreichen, werden diese Gebinde aufgebrochen und ihr Inhalt wird gemischt. Zu diesem Zweck schlägt die genannte Schrift drei Verfahrensmethoden vor:
1. Die Vorbehandlung der Abfälle durch Tieffrieren auf die Temperatur des flüssigen Stickstoffs und die anschließende Zerkleinerung der gefrorenen Abfälle;
2. Die Vorbehandlung durch Verdampfen der Abfälle unter Luftabschluß;
3. Die Vorbehandlung durch Zumischen von Zusatz- oder Magerungsstoffen. Ferner muß in jeden Falle die Luftzufuhr zum Verbrennungsraum so geregelt werden, daß sie im Hinblick auf zugeführte Abfallmengen und Heizwert optimiert ist. Die in dieser Schrift genannten Verfahren sind sehr energie- und kostenaufwendig. Sie sind auf die Situation abgestimmt, daß der Inhalt der einzelnen zu verbrennenden Gebinde unbekannt ist (vergl. Spalte 7, Zeile 31 bis Spalte 8, Zeile 1; Spalte 8, Zeile 25 bis 27). Über die Temperaturen im Verbrennungsraum sowie durchgeführte Maßnahmen zur Entgiftung der Verbrennungsabgase werden keine Aussagen gemacht. Die zum Anmeldezeitpunkt 1972 einzuhaltenden behördlichen Vorschriften sind jedoch in den folgenden Jahrzehnten verschärft worden. Insbesondere war das Problem der Dioxinbildung zum damaligen Zeitpunkt noch nicht bekannt. Die genannte Schrift stellt daher schwerpunktmäßig darauf ab, die Rußbildung im Kamin sowie sichtbare schwarze Rauchwolken zu vermeiden.

Die vorliegende Erfindung hat sich demgegenüber die Aufgabe gestellt, ein Verfahren für die Verbrennung von überwiegend festen Industrie- und Sonderabfällen zur Verfügung zu stellen, wobei diese Sonderabfälle aus bekannten Abfallfraktionen zusammengesetzt sind. Die Verbrennung soll dabei einerseits so erfolgen, daß ein guter Ausbrand, eine gleichmäßige Verbrennung und eine Reduzierung von schädlichen Emissionen, insbesondere von Dioxinemissionen erreicht wird. Ferner sollen unterschiedliche und unter Umständen leicht entzündliche Stoffe verarbeitet werden können, ohne daß es zu Sicherheitsrisiken kommt. Das genannte Verfahren soll dabei energie- und kostengünstig arbeiten und die Einhaltung der Emissionsgrenwerte ohne aufwendige Sekundärmaßnahmen zur Rauchgasreinigung ermöglichen.

Diese Aufgabe wird durch ein Verfahren gelöst, welches folgende Schritte enthält:
A) Zusammenstellung einer Abfallcharge aus den zu verbrennenden Abfällen, welche folgende Fraktionen enthält:
   a) 15 bis 45, vorzugsweise 25 bis 37 Gew.-% Abfälle aus der Polymerchemie, vorzugsweise Destillationsrückstände, Lacke und Lackkomponenten wie Harze und Bindemittel,
   b) 30 bis 80, vorzugsweise 40 bis 64 Gew.% Abfälle aus der Lackproduktion ,vorzugsweise lackverunreinigte Betriebsmittel, Filtermaterialien oder Gebinde,
   c) 0 bis 10 vorzugsweise 1 bis 8 Gew.-% Celluloserückstände, vzw. Papier, Pappe oder Sägemehl,
   c) 5 bis 20 vorzugsweise 10 bis 15 Gew.-% Schlamm, vorzugsweise Klär- oder Fällschlamm,
B) Zerkleinerung der Abfallcharge,
C) Homogenisierung der zerkleinerten Abfallcharge, wobei die Zerkleinerung und Homogenisierung des Abfalls in einer Inertgasatmosphäre stattfindet,
D) Zufuhr der zerkleinerten und homogenisierten Abfallcharge zum Verbrennungsraum über ein Schleusensystem,
E) Verbrennung der Abfälle bei Temperaturen von 700 - 1000° C, vorzugsweise 800 - 900° C.

Mit dem erfindungsgemäßen Verfahren werden überraschenderweise die Ziele der Erfindung gelöst. Dabei wird zum einen mit dem Verfahrensschritt A) aus den einzelnen in ihrem Inhalt bekannten Abfallfraktionen ein "Verbrennungsmenü" zusammenestellt, so daß über die Dauer des Verbrennungsvorganges eine kontrollierte und gleichmäßige Zusammensetzung des Brennstoffes erreicht wird. Desweiteren wird die zusammengestellte Abfallcharge zerkleinert und homogenisiert. Hierdurch werden Inhomogenitäten in der Zusammensetzung des Abfalls ausgeglichen. Die Zerkleinerung und Homogenisierung findet unter einer Intertgasatmosphäre statt, so daß unerwünschte Reaktionen (Brände, Bildung von explosionsfähigen Gas-/Luftgemischen etc.) vermieden werden. Im Gegensatz DE-AS 2 245 324 ist keine energieaufwendige Tiefkühlung des Abfalls auf Temperaturen des flüssigen Stickstoffs notwendig, um eine Zerkleinerung vonnehmen zu können. Die Zerkleinerung ist jedoch eine wichtige Voraussetzung für eine ausreichende Homogenisierung der Abfälle, welche das gute Ausbrandergebnis sicherstellt. Die zerkleinerte und homogenisierte Abfallcharge wird schließlich über ein Schleusensystem dem gleichmäßig Verbrennungsraum zugeführt, wobei dieses Schleusensystem dafür sorgt, daß die Flamme des Feuerraumes nicht auf die Abfallzufuhr durchschlägt. Wesentlich bei dem erfindungsgemäßen Verfahren ist ferner, daß die anschließende Verbrennung bei Temperaturen von 700 -1000°C, vorzugsweise 800 - 900°C stattfindet. Im Stand der Technik waren dagegen sehr viel höhere Temperaturen üblich, typischerweise 1500°C.

Überraschenerweise hat sich gezeigt, daß bei dem erfindungsgemäßen Verfahren schon ohne aufwendige Sekundärmaßnahmen zur Entfernung von Schadstoffen aus dem Rauchgas die behördlichen Emissonsgrenzwerte eingehalten werden können. Hierzu trägt insbesondere die definierte, gleichmäßige und homogene Zusammensetzung des verbrannten Abfalls bei sowie die niedrige Verbrennungsraumtemperatur.

Die zur Verbrennung zugeführte Abfallcharge hat vorzugsweise einen Heizwert von 13 - 25 MJ/kg, ganz besonders bevorzugt 18 - 19 MJ/kg. Die Abfallfraktion aus der Polymerchemie hat typischerweise einen Heizwert von über 25 MJ/kg, ganz besonders bevorzugt von 28 bis 32 MJ/kg.

Der eingesetzte Schlamm, welcher insbesondere Klär- oder Fällschlamm sein kann, hat vorzugsweise einen Wassergehalt von 30 - 70 Gew.-%, ganz besonders bevorzugt von 50 - 60 Gew.-%. Der Schlamm muß daher vor seiner Zufuhr nicht weiter entwässert werden. Hierdurch wird ein erheblicher Bearbeitungs- und Energieaufwand eingespart. Der Schlamm macht sich dabei mit seinem hohen Feuchtigkeitsgehalt positiv bemerkbar, indem er den Heizwert des Abfalls senkt und somit zu der gewünschten Begrenzung der Feuerraumtemperatur beiträgt. Neben den aufgeführten Abfallfraktionen kann der verbrannte Abfall auch andere Fraktionen in den verbleibenden Mengenverhältnissen enthalten. Hierbei kann es sich insbesondere um Metalle, z.B. Bleche aus Farbemballagen handeln. Es ist für das erfindungsgemäße Verfahren sogar vorteilhaft, derartige metallhaltige Abfälle beizumischen bzw. im Wechsel mit den üblicherweise verbrannten Abfallmengen der Verbrennungsanlage zuzuführen. Durch einen derartigen Zusatz von metallhaltigen Abfällen werden die Zerkleinerungs- und Förderungswerkzeuge von an ihnen haftenden Rückständen wirkungsvoll gereinigt.

Vorzugsweise erfolgt die Zerkleinerung der eingesetzten Abfälle auf Stückgrößen von unter 50 mm, ganz besonders bevorzugt unter 20 mm. Eine derartige Zerkleinerung ist einerseits mit tolerierbarem Aufwand erreichbar, andererseits wird die Oberfläche des Brenngutes hinreichend groß, um eine gute Zugänglichkeit für Sauerstoff und damit eine gleichmäßige Verbrennung zu ermöglichen.

Die Inertgasatmosphäre kann sauerstofffrei sein, sie kann jedoch auch Sauerstoff bis zu einem Maximalgehalt von 8 %, vorzugsweise 2 %, enthalten. Häufig sind Gase mit einem derartigen Restgehalt an Sauerstoff leichter und damit billiger zu erhalten. Das erfindungsgemäße Verfahren hat somit den Vorteil, daß es nicht notwendig ist, die Zufuhr von Umgebungsluft vollständig vermeiden zu müssen. Trotzdem entstehen keine Sicherheitsrisiken durch leicht entzündliche Bestandteile des Abfalls oder durch die Vermischung von Abfällen unterschiedlicher Herkunft.

Vorzugsweise eingesetzte Inertgase umfassen abgebranntes Erdgas, Stickstoff, Kohlendioxid und/oder Argon. Es ist auch möglich, Rauchgas vom Ende der Verbrennungsanlage zurückzuführen und als Inertgas zu verwenden.

Bei dem erfindungsgemäßen Verfahren wird die Zerkleinerung vorzugsweise in einem oder in mehreren Schritten in Shreddern oder Brechmühlen durchgeführt. Besonders bevorzugt ist es dabei, daß die eingesetzten Zerkleinerungseinheiten verschiedene Brechbereiche haben, d.h. verschiedene Maximalwerte für die Größe und Festigkeit der zugeführten Abfallstoffe, sowie verschiedene Ausgangswerte für die Größe des erhaltenen Zerkleinerungsproduktes. Vorzugsweise werden derartige unterschiedliche Shredder und Brechmühlen parallel eingesetzt, so daß sie mit dem jeweils für sie optimal geeigneten Abfall beschickt werden können.

Die Homogenisierung des zerkleinerten Abfalls erfolgt vorzugsweise in einer rotierenden Drehtrommel, die insbesondere mit Inneneinbauten versehen sein kann.

Erfindungsgemäß werden die zerkleinerten und homogenisierten Abfälle durch ein Schleusensystem vom Verbrennungsraum getrennt gehalten. Dies ist erforderlich, um ein Durchgreifen des Brandes auf die Zuführeinrichtungen zu verhindern. Zudem wird durch die Schleuse gewährleistet, daß das zugeführte Inertgas nicht durch den Verbrennungsraum weiterströmt, sondern seinen Weg nur durch die Homogenisierungs- und Zerkleinerungseinheit sucht. Des weiteren kann durch das Schleusensystem der Abfall in definierten Portionen dem Verbrennungsraum zugeführt werden.

Das erfindungsgemäße Verfahren erlaubt es auch, wichtige Eigenschaften des angelieferten Abfalls zu erfassen und diese Information bei dessen Weiterbehandlung zu verwerten. Zu Eigenschaften in diesem Sinne gehören neben der Zusammensetzung des Abfalls mechanische Parameter, wie z.B. Festigkeit und Größe der enthaltenen Feststoffe oder das Vorhandensein von Abfallfässern. Eine einfache Möglichkeit für das Erfassen solcher Eigenschaften kann beispielsweise durch die Auswertung von Begleitpapieren erfolgen, die vom Absender des Abfalls mitgegeben werden. Die Information über mechanische Parameter des Abfalls ist insbesondere interessant, wenn parallel Zerkleinerungsvorrichtungen mit verschiedenen Brechbereichen vorhanden sind. In diesem Falle kann sichergestellt werden, daß der jeweilige Abfallcontainer genau der Zerkleinerungsvorrichtung zugeführt wird, die für den im Container enthaltenen Abfall am besten geeignet ist. Die Information über die Zusammensetzung des Abfalls kann insbesondere dazu ausgenutzt werden, den Verbrennungsofen mit einem möglichst gleichmäßigen Angebot an Brennstoffen zu beschicken.

Zur Erfindung gehört auch eine Aufgabevorrichtung für das erfindungsgemäße Verbrennungsverfahren, die mindestens eine Zerkleinerungsvorrichtung für die zugeführten Abfälle, mindestens eine Homogenisierungseinheit für die zerkleinerten Abfälle, ein Schleusensystem für die zerkleinerten und homogenisierten Abfälle sowie eine Zuführung für Inertgas enthält. Das Schleusensystem ist hinter der Homogenisierungseinheit und vor dem Verbrennungsraum angeordnet. Es trennt diese beiden Räume voneinander und erlaubt zusammen mit den Einbauten in der Mischtrommel eine portionierte Zuführung von Abfällen. Die Zuführung für das Inertgas ist vorzugsweise zwischen der Homogenisierungseinheit und dem Schleusensystem angeordnet. Das Inertgas durchströmt die Homogenisierungseinheit und anschließend die Zerkleinerungsvorrichtung. Die eingesetzten Inertgase enthalten vorzugsweise 2 % Sauerstoff. Besonders bevorzugt ist der Einsatz von abgebranntem Erdgas, von Stickstoff, Argon oder Kohlendioxid.

Die erfindungsgemäße Vorrichtung kann ferner in ihrem Eingangsbereich eine Anlieferungsvorrichtung für die zu verbrennenden Abfälle enthalten. Vorzugsweise handelt es sich dabei um ein Einzugsystem, mit dem Container befördert werden. Ferner kann eine Übernahme- und Zuführvorrichtung für die angelieferten Abfälle vorhanden sein. Insbesondere kann es sich dabei um ein Kransystem und eine Hebe-Kippvorrichtung für die Container handeln. Es ist somit möglich, die Zufuhr der Abfälle zu automatisieren.

Die Zerkleinerungsvorrichtung kann insbesondere in Form von Shreddern oder Brechmühlen ausgestaltet sein. Sofern mehrere solcher Zerkleinerungsvorrichtungen eingesetzt werden, sind diese vorzugsweise parallel angeordnet, d.h. der angelieferte Abfall geht durch genau eine der verschiedenen Zerkleinerungsvorrichtungen. Es ist jedoch auch möglich, mehrere Zerkleinerungsvorrichtungen hintereinander anzuordnen, so daß der Abfall diese der Reihe nach durchläuft und dabei immer weiter zerkleinert wird.

Eine bevorzugte Ausführungsform der Homogenisierungseinheit für die zerkleinerten Abfälle besteht aus einer Drehtrommel mit innenliegenden Einbauten. Durch diese Trommel wird eine gleichmäßige Durchmischung der zerkleinerten Abfälle erreicht, wobei diese gleichzeitig zum Schleusensystem weiterbefördert werden.

Mit der erfindungsgemäßen Vorrichtung lassen sich überraschend die in der Aufgabenstellung angestrebten Ziele erreichen. Bei dem Einsatz weiterer üblicher Verbrennungseinrichtungen, wie z.B. Drehofen, Nachverbrennung, Abhitzkessel, Kühl- und Wärmetauschersystem sowie Rauchgasreinigung, lassen sich überraschend gute Werte der Anlage erreichen. So wird ein hervorragender Ausbrand erzielt, der zu sehr niedrigen Restkohlenstoffgehalten in der Flugasche und in der Schlacke führt. Die gleichmäßigere Verbrennung führt zur Vermeidung von Emissionsspitzen (Kohlenmonoxid, organische Kohlenstoffverbindungen und NOₓ). Überraschenderweise können mit einer derartigen Anlage auch die Dioxingrenzwerte der 17.BImSchV ohne weitere Sekundärmaßnahmen eingehalten werden. Die erfindungsgemäße Vorrichtung erlaubt die Verbrennung unterschiedlichster Feststoffe mit unterschiedlichem Zerkleinerungsverhalten, da die eingesetzten Zerkleinerungseinheiten einen weiten Arbeitsbereich haben, und da bei dem Einsatz von mehreren parallel geschalteten Zerkleinerungseinheiten eine optimale Beschickung derselben möglich ist. Insbesondere können leicht entzündliche Stoffe entsorgt werden, wie z.B. in Fässern enthaltene Lack- oder Lösemittelreste. Die Sicherheit der Anlage wird trotz eines Einsatzes solcher Stoffe und trotz der mechanischen Zerkleinerung und intensiven Durchmischung unterschiedlichster Stoffe durch die Zuführung des Inertgases in den kritischen Bereichen der Anlage gewährleistet. Ohne eine solche erfindungsgemäße Maßnahme wäre die Zerkleinerung und Homogenisierung von Industrie- und Sonderabfällen aus Sicherheitsgründen nicht durchführbar.

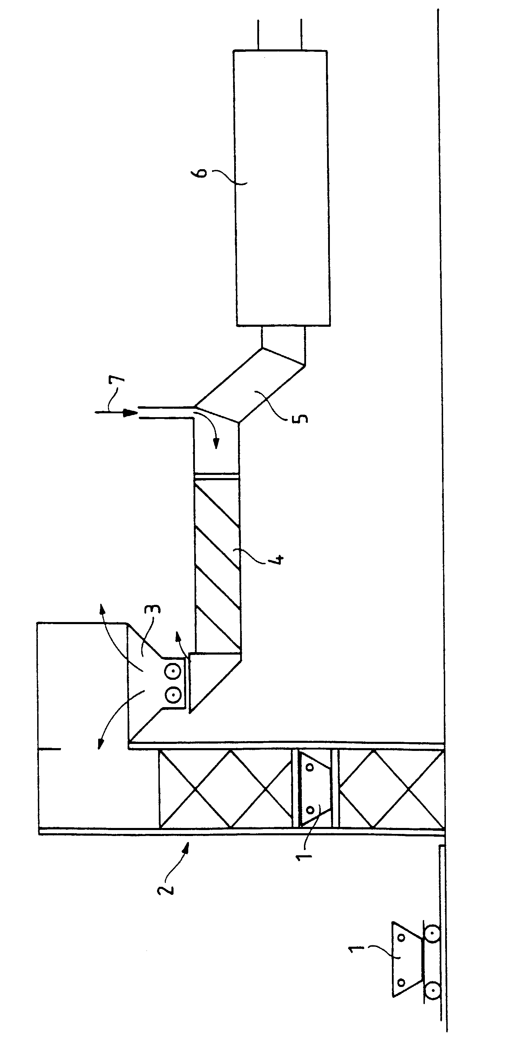

Im folgenden werden die Vorrichtung und das Verfahren beispielhaft anhand der Figur beschrieben.

Zu verbrennende Industrie- und Sonderabfälle werden bei der Anlage nach der Abbildung über ein Einzugsystem in Containern 1 angeliefert. In der Regel wird bei der Errichtung einer derartigen Anlage ein bestimmter Containertyp als Standard festgelegt. Dies kann beispielsweise durch sog. ASP-Container erfolgen. Spezialabfälle können jedoch auch in Gitterboxen angeliefert werden.

Die Zuteilung der angelieferten Container (oder die Anforderung der Container von den Werkseinheiten selbst) findet daraufhin in Abhängigkeit vom Containerinhalt statt. Dabei ist darauf zu achten, daß die erfindungsgemäße Zusammensetzung der Abfallfaktionen eingehalten wird. Diese Zusammensetzung und Auswahl kann vom Betriebspersonal durchgeführt werden, sie kann jedoch auch automatisch mit einer Elektronischen Datenverarbeitungsanlage stattfinden. Hierbei ist es insbesondere auch möglich, die Containerinhalte mit einer automatischen Datenerfassung zu bearbeiten (z.B. Barcodesystem). Sofern sich Teile des Abfalls an den Zerkleinerungseinheiten oder Förderschnecken abgesetzt haben, ist es möglich, eine ausschließlich oder überwiegend Metalle enthaltende Abfallmenge der Verbrennung zuzuführen, wobei die Metalle für eine Selbstreinigung der Geräte sorgen.

Nach ihrer Anlieferung und Auswahl werden die Container von einem handelsüblichen Kransystem erfaßt und auf ein Hebe-Kippgerät 2 übertragen. In der dem Beispiel zugrundeliegenden Anlage kamen Geräte der Firma Otto Dieterle Maschinenbau GmbH & Co., Ascheberg, zur Anwendung. In einem derartigen Hebe-Kippgerät2 werden die Container auf eine Hebebühne gesetzt und mit dem Gerät fest verankert. Sodann wird der gesamte Container auf die erforderliche Höhe angehoben, und schließlich durch Kippen in den Trichter der Zerkleinerungseinheit 3 entleert.

In der hier beschriebenen Anlage werden parallel zwei verschiedene Zerkleinerer 3 eingesetzt. Eine von ihnen ist insbesondere für besonders große Feststoffe geeignet und kann z.B. auch 220 1-Fässer zerkleinern. Dagegen können mit dem zweiten Zerkleinerer faserhaltige Materialien (wie z.B. Papier, Pappe, Holz, Kunststoffolien, sog. Big Bags) zerkleinert werden. Geeignete Zerkleinerungsgeräte arbeiten in der Regel mit rotierenden, ineinandergreifen Rotorscheren. Geeignete Geräte werden z.B. von den Firmen Hatlapa GmbH, Uetersen, und ARP, Alpirsbach-Peterszell, angeboten. Das die Rotorschere verlassende Material hat einen maximalen Durchmesser von weniger als 30 bis 40 mm.

Das zerkleinerte Material gelangt anschließend in die Drehtrommel 4. Dort wird es durch die ständige Rotation der Trommel und durch die Wirkung von innenliegenden Einbauten innig durchmischt. Am Ende dieser Drehtrommel gelangt daher ein äußerst homogenes Brenngut in das Schleusensystem 5. Dieses Schleusensystem trennt den bisher beschriebenen Aufgabebereich des Abfalls von dem eigentlichen Verbrennungsbereich. Von der Schleuse 5 gelangt das Material zur Verbrennung in den Drehofen 6, und von dort in weitere übliche Stufen einer Verbrennungsanlage. Das Schleusensystem 5 selbst besteht aus mindestens einer Kammer, die auf der der Mischtrommel 4 zugewandten Seite geöffnet, und auf der dem Drehofen 6 zugewandten Seite geschlossen ist. Um den Drehofen zu beschicken, wird zunächst die der Mischtrommel 4 zugewandte Seite verschlossen, und sodanii der Ausgang zum Drehofen geöffnet. Auf diese Weise ist sichergestellt, daß zu keinem Zeitpunkt eine durchgehende Verbindung vom Drehofen 6 zu der Aufgabeeinheit 3, 4 besteht. Daher kann auch kein Brand zu den angelieferten Abfallstoffen durchgreifen. Die Verbrennungstemperaturen im Drehofen 6 liegen typischerweise um 850°C.

Damit es während des Zerkleinerungs- und Homogenisierungsvorganges nicht zu Explosionen, Bränden oder unerwünschten Reaktionen zwischen den Abfallstoffen kommt, wird über eine Zuführung 7 ständig Inertgas in die Anlage eingeblasen. Die Zuführung 7 befindet sich noch vor der Schleuse 5, so daß das zugeführte Inertgas in die Drehtrommel 4 gedrückt wird, da ihm der Weg zum Drehofen 6 durch die Schleuse versperrt ist. Nach Durchströmen der Mischtrommel 4 tritt das Inertgas in die Zerkleinerer 3 über und verläßt anschließend die Anlage. Im Bereich der Zerkleinerer 3 kann auch ein Unterdruck erzeugt werden, um die Strömungsrichtung des Inertgases zu unterstützen. Vorzugsweise wird als Inertgas abgebranntes Erdgas eingesetzt. Geeignet sind auch sonstige Gase, sofern sie einen Sauerstoffgehalt von weniger als 8 %, vorzugsweise weniger als 2%, aufweisen.

## Patentansprüche

1. Verfahren zur Verbrennung von überwiegend festen Insustrie- und Sonderabfällen, enhaltend die Schritte
A) Zusammenstellung einer Abfallcharge aus den zu verbrennenden Abfällen, welche folgende Fraktionen enthält:
a) 15 bis 45 Gew.-% Abfälle aus der Polymerchemie, Destillationsrückstände, Lacke und Lackkomponenten wie Harze und Bindemittel,
b) 30 bis 80 Gew.% Abfälle aus der Lackproduktion, lackverunreinigte Betriebsmittel, Filtermaterialien oder Gebinde,
c) 0 bis 10 Gew.-% Celluloserückstände, vzw. Papier, Pappe oder Sägemehl,
c) 5 bis 20 Gew.-% Schlamm, vorzugsweise Klär- oder Fällschlamm,
B) Zerkleinerung der Abfallcharge,
C) Homogenisierung der zerkleinerten Abfallcharge, wobei die Zerkleinerung und Homogenisierung des Abfalls in einer Inertgasatmosphäre stattfindet,
D) Zufuhr der zerkleinerten und homogenisierten Abfallcharge zum Verbrennungsraum über ein Schleusensystem,
E) Verbrennung der Abfälle bei Temperaturen von 700 - 1000°C, vzw. 800 - 900°C.

2. Verfahren nach Anspruch 1,
dadurch gekennzeichnet, daß die der Verbrennung zugeführte Abfallcharge einen Heizwert von 13 bis 25 MJ/kg vzw. 18 - 19 MJ/kg hat.

3. Verfahren nach Anspruch 1 oder 2,
dadurch gekennzeichnet, daß die Abfälle aus der Polymerchemie einen Heizwert von über 25 MJ/kg,vorzugsweise 28 bis 32 MJ/kg haben.

4. Verfahren nach einander Ansprüche 1 bis 3,
dadurch gekennzeichnet, daß der Schlamm einen Wassergehalt von 30 - 70 Gew.-%, vzw. 50 - 60 Gew.-% hat.

5. Verfahren nach einem der Ansprüche 1 bis 4,
dadurch gekennzeichnet, daß die Abfallcharge als weitere Abfallfraktion Metalle, vzw. Bleche, enthält oder im Wechsel mit überwiegend solche Metalle enthaltenden Chargen zugeführt wird.

6. Verfahren nach einem der Ansprüche 1 bis 5,
dadurch gekennzeichnet, daß die Zerkleinerung auf Stückgrößen von unter 50 mm, vorzugsweise unter 20 mm, erfolgt.

7. Verfahren nach einem der Ansprüche 1 bis 6,
dadurch gekennzeichnet, daß als Inertgase Gase mit einem Sauerstoffgehalt von 0 bis 8 Vol.-%, vorzugsweise 0 bis 2 Vol.-%, verwendet werden.

8. Verfahren nach einem der Ansprüche 1 bis 7,
dadurch gekennzeichnet, daß als Inertgas abgebranntes Erdgas, Stickstoff, Kohlendioxid und/oder Argon verwendet wird.

9. Verfahren nach einem der Ansprüche 1 bis 8,
dadurch gekennzeichnet, daß die Zerkleinerung in einem oder mehreren Schritten in Shreddern oder Brechmühlen (3) erfolgt.

10. Verfahren nach Anspruch 9,
dadurch gekennzeichnet, daß Shredder oder Brechmühlen (3) mit verschiedenen Brechbereichen eingesetzt werden, die vorzugsweise parallel eingesetzt und mit jeweils geeignetem Abfall spezifisch beschickt werden.

11. Verfahren nach einem der Ansprüche 1 bis 10,
dadurch gekennzeichnet, daß die Homogenisierung des zerkleinerten Abfalls in einer rotierenden Drehtrommel(4), die vorzugsweise mit Inneneinbauten versehen ist, erfolgt.

12. Verfahren nach einem der Ansprüche 1 bis 11,
dadurch gekennzeichnet, daß für das Verfahren relevante Eigenschaften des angelieferten Abfalls, vorzugsweise bestimmte chemische und mechanische Parameter, erfaßt werden, und daß die Zufuhr der Abfälle in Abhängigkeit von den erfaßten Eigenschaften im Hinblick auf die Auswahl der geeigneten Zerkleinerungsvorrichtung (3) und die mengen- und stoffmäßige Optimierung des Verbrennungsprozesses geregelt wird.

13. Aufgabevorrichtung für die Verbrennung von überwiegend festen Industrie- und Sonderabfällen in einem Verfahren nach einem der Ansprüche 1 - 12, enthaltend
a) eine Anlieferungsvorrichtung für die zu verbrennenden Abfälle, vorzugsweise in Form eines Einzugsystems zur Beförderung von Containern (1);
b) eine Übernahme- und Zuführvorrichtung für die angelieferten Abfälle, vorzugsweise in Form eines Kransystems und einer Hebe-Kippvorrichtung (2) für Container;
c) mindestens eine Zerkleinerungsvorrichtung (3) für die zugeführten Abfälle, vorzugsweise in Form von Shreddern oder Brechmühlen, die vorzugsweise parallel und/oder hintereinander angeordnet sind;
d) einen Förderer, ggf. einen Querförderer, vorzugsweise einen Schneckenförderer, für den Weitertransport der zerkleinerten Abfälle von der Zerkleinerungsvorrichtung (3);
e) mindestens eine Homogenisierungseinheit (4) für die zerkleinerten Abfälle, vorzugsweise in Form einer Drehtrommel mit innenliegenden Einbauten;
dadurch gekennzeichnet, daß die Aufgabenvorrichtung weiterhin
f) ein Schleusensystem (5) für die zerkleinerten und homogenisierten Abfälle, welches zwischen Verbrennungsraum (6) und Homogenisierungseinheit (4) angeordnet ist und eine portionierte Zuführung der Abfälle ermöglicht und
g) mindestens eine Zuführung (7) für Inertgas zur Zerkleinerungsvorrichtung (3) und Homogenisierungseinheit (4), wobei die Zuführung (7) vorzugsweise zwischen Homogenisierungseinheit (4) und Schleusensystem (5) angeordnet ist,
enthält.

## Claims

1. Process for the combustion of predominantly solid industrial and special waste, comprising the steps of
A) composing a waste batch from the waste materials to be combusted, which contains the following fractions:
a) 15 to 45% by weight of waste from polymer chemistry, distillation residues, coatings and coating components, such as resins and binding agents,
b) 30 to 80% by weight of waste from the production of coatings, coating-contaminated operating means, filter materials or packing drums,
c) 0 to 10% by weight of cellulose residues, preferably paper, cardboard or sawdust,
c) 5 to 20% by weight of sludge, preferably clarification or precipitated sludge,
B) Comminution of the waste batch,
C) Homogenization of the comminuted waste batch, the comminution and homogenization of the waste taking place in an inert-gas atmosphere,
D) Feeding the comminuted and homogenized waste batch to the combustion chamber via a lock system,
E) Combustion of the waste at temperatures of 700-1000°C, preferably 800-900°C.

2. Process according to Claim 1, characterized in that the waste batch fed for combustion has a calorific value of from 13 to 25 MJ/kg, preferably of 18-19 MJ/kg.

3. Process as claimed in Claim 1 or 2, characterized in that the waste from polymer chemistry has a calorific value of over 25 MJ/kg, preferably of 28 to 32 MJ/kg.

4. Process according to one another [sic] Claims 1 to 3, characterized in that the sludge has a water content of from 30-70% by weight, preferably of 50-60% by weight.

5. Process according to one of Claims 1 to 4, characterized in that the waste batch contains, as a further waste fraction, metals, preferably sheet metals, or is fed alternating with batches which predominantly contain such metals.

6. Process according to one of Claims 1 to 5, characterized in that the comminution takes place to fragment sizes of less than 50 mm, preferably less than 20 mm.

7. Process according to one of Claims 1 to 6, characterized in that the inert gases used are gases with an oxygen content of 0 to 8% by volume, preferably 0 to 2% by volume.

8. Process according to one of Claims 1 to 7, characterized in that burnt-off natural gas, nitrogen, carbon dioxide and/or argon is used as the inert gas.

9. Process according to one of Claims 1 to 8, characterized in that the comminution takes place in one or more steps in shredders or breaker mills (3).

10. Process according to Claim 9, characterized in that shredders or breaker mills (3) with different breaking ranges are employed, which shredders or mills are preferably used in parallel and are each specifically fed with waste which is suitable for them.

11. Process according to one of Claims 1 to 10, characterized in that the homogenization of the comminuted waste takes place in a rotary drum (4), which is preferably provided with internals.

12. Process according to one of claims 1 to 11, characterized in that properties of the waste delivered which are relevant to the process, preferably certain chemical and mechanical parameters, are recorded, and in that the waste is fed as a function of the recorded properties with regard to the selection of a suitable comminution device (3) and the optimization of the combustion process in terms of quantities and materials is regulated.

13. Feeder device for the combustion of predominantly solid industrial and special waste in a process according to one of Claims 1-12, containing:
a) a delivery device for the waste to be combusted, preferably in the form of a feed system for conveying containers (1);
b) a transfer and feed device for the waste delivered, preferably in the form of a crane system and a lifting and tipping device (2) for containers;
c) at least one comminution device (3) for the waste supplied, preferably in the form of shredders or breaker mills, which are preferably arranged in parallel and/or one behind the other;
d) a conveyor, if appropriate a transverse conveyor, preferably a worm conveyor, for further transport of the comminuted waste from the comminution device (3) ;
e) at least one homogenization unit (4) for the comminuted waste, preferably in the form of a rotary drum with internals;
characterized in that the feeder device furthermore contains
f) a lock system (5) for the comminuted and homogenized waste, which is arranged between combustion chamber (6) and homogenization unit (4) and allows the waste to be fed in portions and
g) at least one feed (7) for providing inert gas to the comminution device (3) and homogenization unit (4) , the feed (7) preferably being arranged between homogenization unit (4) and lock system (5).

## Revendications

1. Procédé d'incinération principalement de déchets solides industriels et spéciaux, comprenant les étapes de
A) Composition d'une charge de déchets à partir des déchets à incinérer, laquelle contient les fractions suivantes:
a) 15 à 45% en poids de déchets de la chimie des polymères, de résidus de distillation, de laques, et de composants de laque comme des résines et des liants,
b) 30 à 80% en poids de déchets de la production de laque, d'outils de production salis par la laque, de matériaux de filtres ou de fûts métalliques,
c) 0 à 10% en poids de résidus de cellulose, de préférence le papier, le carton ou la sciure de bois,
d) 5 à 20% en poids de boue, de préférence de boue de curage ou de boue précipitée,
B) Broyage de la charge de déchets,
C) Homogénéisation de la charge de déchets broyée, le broyage et l'homogénéisation des déchets ayant lieu dans une atmosphère de gaz inerte,
D) Acheminement de la charge de déchets broyée et homogénéisée vers la chambre d'incinération via un système d'écluses,
E) Incinération des déchets à des températures de 700-1000°C, de préférence 800-900°C.

2. Procédé suivant la revendication 1, caractérisé en ce que la charge de déchets acheminée à l'incinération a une valeur calorifique de 13 à 25 MJ/kg, de préférence 18-19 MJ/kg.

3. Procédé suivant la revendication 1 ou 2, caractérisé en ce que les déchets de la chimie des polymères ont une valeur calorifique supérieure à 25 MJ/kg, de préférence 28 à 32 MJ/kg.

4. Procédé suivant les revendications successives 1 à 3, caractérisé en ce que la boue a une teneur en eau de 30 à 70% en poids, de préférence 50-60% en poids.

5. Procédé suivant l'une quelconque des revendications 1 à 4, caractérisé en ce que la charge de déchets contient des métaux comme autre fraction de déchets, de préférence des tôles, ou est acheminée en variation avec des charges contenant principalement de tels métaux.

6. Procédé suivant l'une quelconque des revendications 1 à 5, caractérisé en ce que le broyage produit des tailles unitaires inférieures à 50 mm, de préférence inférieures à 20 mm.

7. Procédé suivant l'une quelconque des revendications 1 à 6, caractérisé en ce que des gaz avec une teneur en oxygène de 0 à 8% en volume, de préférence 0 à 2% en volume, sont utilisés comme gaz inertes.

8. Procédé suivant l'une quelconque des revendications 1 à 7, caractérisé en ce que du gaz naturel brûlé, de l'azote, du dioxyde de carbone et/ou de l'argon sont utilisés comme gaz inerte.

9. Procédé suivant l'une quelconque des revendications 1 à 8, caractérisé en ce que le broyage s'effectue dans des déchiqueteurs ou des broyeurs (3) en une ou plusieurs étapes.

10. Procédé suivant la revendication 9, caractérisé en ce que des déchiqueteurs ou des broyeurs (3) à diverses zones de broyage sont utilisés, qui sont de préférence utilisés parallèlement et sont spécifiquement chargés de déchets appropriés.

11. Procédé suivant l'une quelconque des revendications 1 à 10, caractérisé en ce que l'homogénéisation des déchets broyés s'effectue dans un tambour rotatif (4) en rotation, qui est de préférence muni de chicanes intérieures.

12. Procédé suivant l'une quelconque des revendications 1 à 11, caractérisé en ce que pour le procédé, des propriétés pertinentes des déchets livrés, de préférence certains paramètres chimiques et mécaniques, sont détectées, et en ce que l'acheminement des déchets est réglé en fonction des propriétés détectées concernant le choix du dispositif de broyage (3) approprié et l'optimisation au niveau des quantités et des substances du procédé d'incinération.

13. Dispositif de chargement pour l'incinération principalement des déchets industriels et spéciaux lors d'un procédé suivant l'une quelconque des revendications 1 à 12, contenant,
a) un dispositif de livraison pour les déchets à incinérer, de préférence sous la forme d'un système d'entraînement pour le transport de conteneurs (1);
b) un dispositif de réception et d'acheminement pour les déchets livrés, de préférence sous la forme d'un système de grue et d'un dispositif élévateur-culbuteur (2) pour conteneurs;
c)au moins un dispositif de broyage (3) pour les déchets acheminés, de préférence sous la forme de déchiqueteurs ou de broyeurs, qui sont disposés de préférence parallèlement et/ou l'un derrière l'autre;
d) un transporteur, le cas échéant une bande transversale, de préférence un transporteur à hélices, pour la poursuite du transport des déchets broyés du dispositif de broyage (3);
e) au moins une unité d'homogénéisation (4) pour les déchets broyés, de préférence sous la forme d'un tambour rotatif muni de chicanes situées à l'intérieur;
caractérisé en ce que le dispositif de chargement comprend également
f) un système d'écluses (5) pour les déchets broyés et homogénéisés, lequel est disposé entre la chambre d'incinération (6) et l'unité d'homogénéisation (4) et permet un acheminement proportionné des déchets, etg) au moins une conduite d'alimentation (7) pour du gaz inerte vers le dispositif de broyage (3) et l'unité d'homogénéisation (4), la conduite d'alimentation (7) étant disposée de préférence entre l'unité d'homogénéisation (4) et le système d'écluses (5).
